# EUROPEAN PATENT APPLICATION

(11) **EP 4 410 684 A1**
(43) Date of publication of application: **07.08.2024**
(21) Application number: 24155058.1
(22) Date of filing: 31.01.2024
(51) Int. Cl.: B64F 1/32, B65G 39/02, B64C 1/20, B64D 9/00

(54) **LOW HEIGHT BALL TRANSFER UNIT**

(30) Priority: 03.02.2023 US 202318164352
(71) Applicant: Goodrich Corporation, Charlotte, NC 28217-4578 (US)
(72) Inventor: STEGMILLER, Wesley K., Jamestown, ND, 58401 (US); LARSON, Wallace H., Sauk Centre, MN, 56378 (US)
(74) Representative: Dehns

(57) **Abstract**

A ball transfer unit is disclosed herein. The ball transfer unit includes a can (302), a ball race (304) disposed in the can (302), a ball supported by the ball race (304), and an elastomeric spring (316) disposed between the ball race (304) and the can (302), the elastomeric spring (316) supporting the ball race (304).

## Description

### FIELD

The present disclosure generally relates to cargo handling systems, and more specifically, to ball transfer units used in cargo handling systems.

### BACKGROUND

Aircraft cargo handling systems transport, guide and restrain cargo within the cargo hold of an aircraft. Typical aircraft cargo handling systems use a combination of fixed or moveable guides or restraints to hold cargo pallets or containers (e.g., unit load devices, or ULDs) in place during flight. Most systems use fixed side guides along the outboard edges of the aircraft and/or retractable guides inboard to provide restraint in the Y (lateral) and Z (vertical) directions and retractable restraints that handle the X (longitudinal) and Z directions on the forward and aft edges of the ULDs. Other restraint schemes for other ULDs use fixed side guides with retractable restraints that extend into pockets on the sides of the ULDs to provide X, Y and Z restraint on one or both sides of the ULD and retractable guides along the other side to handle Y and Z restraint. Other restraint schemes include ball transfer units (BTUs) that allow cargo to move in the X, Y, and Z directions.

### SUMMARY

A ball transfer unit is disclosed herein. The ball transfer unit includes a can, a ball race disposed in the can, a ball supported by the ball race, and an elastomeric spring disposed between the ball race and the can, the elastomeric spring supporting the ball race.

In various embodiments, the ball transfer unit further includes a plurality of ball bearings disposed in the ball race and between the ball race and the ball and a ball race cover configured to secure the ball in the ball race.

In various embodiments, the can further includes a first vertical portion having a first diameter, a second vertical portion disposed below the first vertical portion, the second vertical portion having a second diameter, the second diameter is less than the first diameter, and a horizontal portion extending between the first vertical portion and the second vertical portion. In various embodiments, the can further includes a first attenuation limiter formed adjacent the horizontal portion and the second vertical portion, the first attenuation limiter configured to provide support for an outer edge of the ball race when the ball transfer unit is under a load.

In various embodiments, the can further includes a second attenuation limiter formed in a bottom portion of the can, the second attenuation limiter configured to support a bottom portion of the ball race when the ball transfer unit is under the load. In various embodiments, the elastomeric spring includes one of a fluorosilicone, a fluorocarbon, a nitrile, and a thermo-plastic rubber. In various embodiments, the elastomeric spring has a circular cross section.

Also disclosed herein is a cargo handling system. The cargo handling system includes a ball panel and a plurality of ball transfer units disposed in the ball panel. Each of the plurality of ball transfer units includes a can, a ball race disposed in the can, a ball supported by the ball race, and an elastomeric spring disposed between the ball race and the can, the elastomeric spring supporting the ball race.

In various embodiments, each of the plurality of ball transfer units further includes a plurality of ball bearings disposed in the ball race and between the ball race and the ball and a ball race cover configured to secure the ball in the ball race. In various embodiments, the can further includes a first vertical portion having a first diameter, a second vertical portion disposed below the first vertical portion, the second vertical portion having a second diameter, the second diameter is less than the first diameter, and a horizontal portion extending between the first vertical portion and the second vertical portion.

In various embodiments, the can further includes a first attenuation limiter formed adjacent the horizontal portion and the second vertical portion, the first attenuation limiter configured to provide support for an outer edge of the ball race when the ball transfer unit is under a load. In various embodiments, the can further includes a second attenuation limiter formed in a base of the can, the second attenuation limiter configured to support a bottom portion of the ball race when the ball transfer unit is under the load.

In various embodiments, the elastomeric spring includes one of a fluorosilicone, a fluorocarbon, a nitrile, and a thermo-plastic rubber. In various embodiments, the elastomeric spring has a circular cross section.

Also disclosed herein is an aircraft including a cargo compartment, a cargo door that provides access to the cargo compartment, a cargo handling system disposed in the cargo compartment, a ball panel disposed in the cargo compartment adjacent the cargo door, and a plurality of ball transfer units disposed in the ball panel. Each of the plurality of ball transfer units includes a can, a ball race disposed in the can, a ball supported by the ball race, and an elastomeric spring disposed between the ball race and the can, the elastomeric spring supporting the ball race.

In various embodiments, the can further includes a first vertical portion having a first diameter, a second vertical portion disposed below the first vertical portion, the second vertical portion having a second diameter, the second diameter is less than the first diameter, and a horizontal portion extending between the first vertical portion and the second vertical portion. In various embodiments, the can further includes a first attenuation limiter formed adjacent the horizontal portion and the second vertical portion, the first attenuation limiter configured to provide support for an outer edge of the ball race when the ball transfer unit is under a load.

In various embodiments, the can further includes a second attenuation limiter formed in a base of the can, the second attenuation limiter configured to support a bottom portion of the ball race when the ball transfer unit is under the load.

In various embodiments, the elastomeric spring includes one of a fluorosilicone, a fluorocarbon, a nitrile, and a thermo-plastic rubber. In various embodiments, the elastomeric spring has a circular cross section.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an axonometric view of an aircraft being loaded with cargo, in accordance with various embodiments.
FIG. 2 illustrates a top down view of a cargo handling system, in accordance with various embodiments.
FIGS. 3A, 3B, and 3C illustrate views of a ball transfer unit used in a cargo handling system, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein is a low height ball transfer unit (LBTU). Low height ball transfer unit (LBTU) includes a can that supports a ball race, a ball race top, a plurality of ball bearings, and a ball over which cargo may travel. A low height ball transfer unit, in various embodiments, allows for omnidirectional motion (i.e., X and Y) of the ball within the ball race. In various embodiments, the ball has a diameter of about 1 in. In various embodiments, the ball is hollow. In various embodiments, each of the plurality of ball bearings has a diameter of about 0.125 in. Current ball transfer units include a compression spring and are sized to fit into current cargo handling systems. Future cargo handling systems may have a lower height than current cargo handling systems and current ball transfer units may not fit into the lower height cargo handling systems. However, the low height ball transfer unit described herein will fit in lower height cargo handling systems.

A low height ball transfer unit in accordance with various embodiments includes a can and an elastomeric spring. The can is shorter than conventional ball transfer units and the elastomeric spring is shorter and lighter than conventional compression springs. The elastomeric spring is disposed within the can and between the can and the ball race, providing support and attenuation for the ball race and thus the ball and the cargo rolling over the ball. Additionally, in various embodiments, the elastomeric spring provides isolation from a galvanic corrosion perspective between the can and the ball race. Using the elastomeric spring allows the LBTU to be lighter and shorter than conventional ball transfer units (BTUs) while supporting the same load as conventional BTUs.

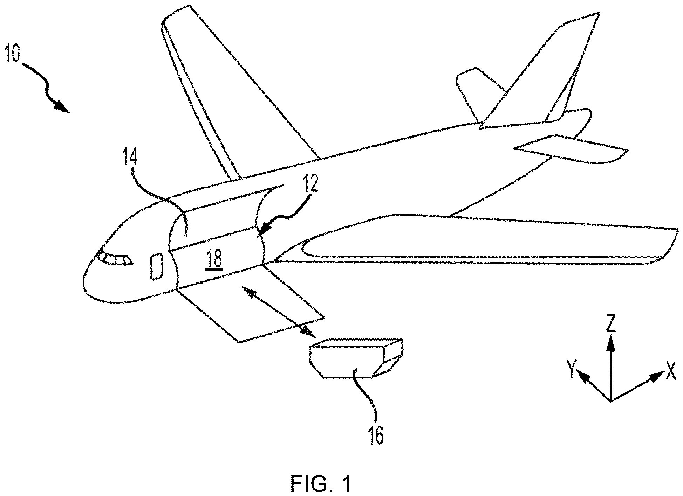

Referring to FIG. 1, an aircraft 10 is illustrated, in accordance with various embodiments. Aircraft 10 includes a cargo compartment 12. A cargo door 14 provides access to cargo compartment 12 from outside aircraft 10. Cargo 16 (e.g., pallets, unit load devices (ULDs), etc.) may be loaded and unloaded through cargo door 14 and onto a cargo deck 18 of aircraft 10.

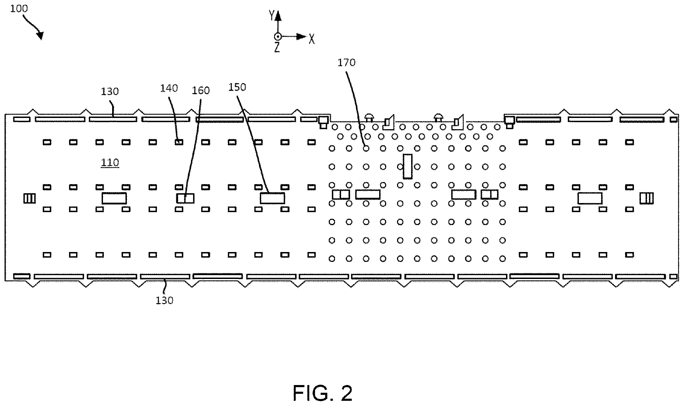

Referring now to FIG. 2, top view of a cargo handling system 100 is illustrated, in accordance with various embodiments. Cargo handling system 100 may be used to load, move, and unload cargo 16 from cargo deck 18. Cargo handling system 100 includes components configured to facilitate translation of cargo 16 along cargo deck 18. For example, cargo handling system 100 may include a top surface 110, a plurality of roller trays (caster trays) disposed below the top surface 110, and a plurality of edge restraint/guides 130. In various embodiments, top surface 110 provide a contiguous flat floor through a cargo compartment (e.g., cargo compartment 12 from FIG. 1).

The plurality of roller trays, which each include one or more rollers 140, may be oriented in a longitudinal direction. As used herein, the term "longitudinal" refers to forward and aft directions (i.e., a direction parallel to the x-axis on the provided X-Y-Z axes). In this regard, the plurality of roller trays may facilitate forward and aft translation of cargo 16. In various embodiments, the plurality of roller trays may be configured to act as floor beams for the top surface 110. In this regard, a proximate portion of each roller tray may couple to an aircraft frame and a top portion of each roller tray may couple to the top surface 110 and support the top surface 110 structurally, in accordance with various embodiments.

In various embodiments, the top surface 110 may be made of metal, composite, or a combination of the two. In various embodiments, the top surface 110 may comprise a metallic top surface and an underlying composite structure. In this regard, the composite structure may better facilitate the strength and stiffness requirements of the top surface 110 when the trays are separated by large distances, and the metal top surface may provide greater robustness and resistance to wear during use.

The plurality of roller trays may further include one or more ball transfer units (BTUs) 170 disposed therein. The one or more BTUs being referred to as a ball panel. The BTUs 170 may be disposed proximate the cargo door 14 from FIG. 1. The BTUs 170 may facilitate lateral and longitudinal translation of cargo 16 from FIG. 1. In this regard, the BTUs 170 may rotate about any axis defined by a horizontal plane (e.g., the X-Y plane).

Cargo handling system 100 may further include one or more power drive units (PDUs) 150 configured to propel cargo 16 in a desired direction. PDUs 150 may be located in fittings between adjacent roller trays, located in the plurality of roller trays, and/or in any other desired location along cargo deck 18. The PDUs 150 may be disposed in fittings below the top surface 110 and/or the fittings may be substantially flush with the top surface 110. In this regard, the PDUs may be flush with, or protrude slightly from, the top surface 110.

Edge restraint/guides 130 may be located along the edges of cargo deck 18. Edge restraint/guides 130 may restrict lateral and vertical translation of cargo 16. As used herein, the term "lateral" refers to directions perpendicular to the longitudinal direction (i.e., directions parallel to the y-axis on the provided X-Y-Z axes). As used herein, the term "vertical" refers to directions perpendicular to cargo deck 18 (i.e., direction perpendicular to the X-Y plane and/or parallel to the Z-axis on the provided X-Y-Z axes).

Edge restraint/guides 160 may be located between adjacent roller trays, located in the plurality of roller trays, and/or in any other desired location along cargo deck 18. Edge restraint/guides 130 may restrict longitudinal and vertical translation of cargo 16 during transportation of cargo 16 from FIG. 1. Edge restraint/guides 160 may retract in a respective fitting to a position below or flush with the top surface 110 during loading of cargo 16 from FIG. 1. Once a cargo 16 is in place for transport, a respective edge restraint/guide assembly in the edge restraint/guides 160 may be deployed to restrict longitudinal and vertical translation of cargo 16 during transport.

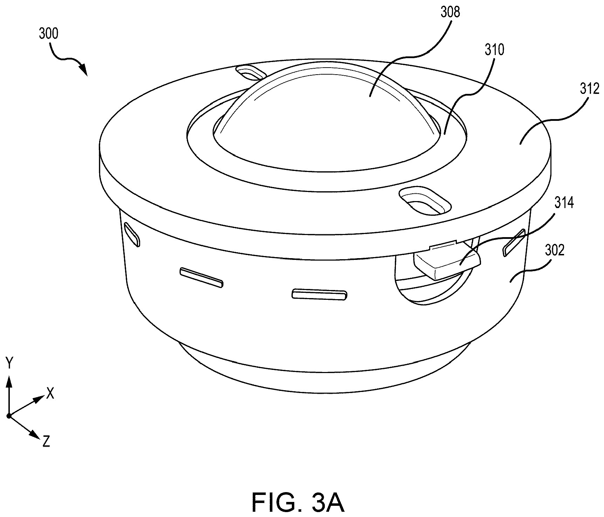

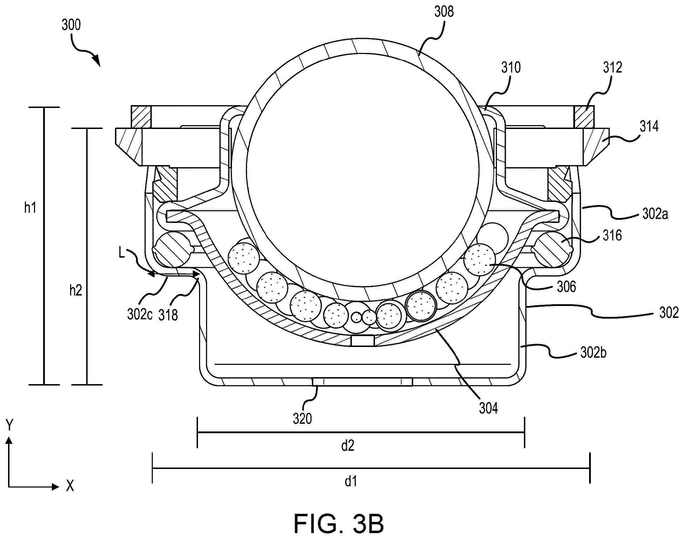

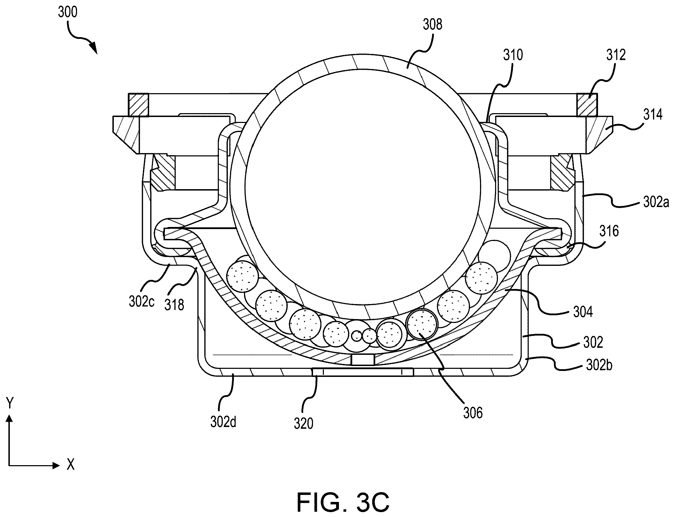

Referring now to FIGS. 3A-3C, a ball transfer unit 300 is illustrated, in accordance with various embodiments. FIG. 3A illustrates a perspective view of ball transfer unit 300, FIG. 3B illustrates a cross section of ball transfer unit 300 in an unloaded state, and FIG. 3C illustrates a cross section of ball transfer unit 300 in a loaded state. Ball transfer unit 300 includes a can 302, a ball race 304, a plurality of ball bearings 306, a ball 308, a ball race cover 310, a top cover 312, latch pins 314, and a spring 316. In various embodiments, ball transfer unit 300 may include a first attenuation limiter 318. In various embodiments, ball transfer unit 300 may include a second attenuation limiter 320.

Ball transfer unit 300 has a height h1 (e.g., in the y-axis) from a bottom surface of can 302 to a top surface of top cover 312. Can 302 has a height h2 from the bottom surface of can 302 to a top surface of can 302. Height h2 is less than height h1. In various embodiments, height h2 is about 50% to about 95% of height h1. In various embodiments, height h2 is about 60% to about 90% of height h1. Can 302 includes an upper portion 302a having vertical walls (e.g., in the y-axis) and a lower portion 302b having vertical walls (e.g., in the y-axis). Upper portion 302a and lower portion 302b are joined by a horizontal portion 302c (e.g., in the x-axis). Upper portion 302a has a first diameter d1 and lower portion 302b has a second diameter d2 that is less than first diameter d1. In various embodiments, diameter d2 is about 60% to about 95% of diameter d1. In various embodiments, diameter d2 is about 70% to about 85% of diameter d1. Horizontal portion 302c has a length L that is equal to half the difference between first diameter d1 and second diameter d2 (i.e., (d1-d2)/2).

Ball race 304 has a bowl shape and is sized to fit within can 302. That is, a diameter of ball race 304 is less than diameter d1 and greater than diameter d2. Ball race 304 is configured to hold the plurality of ball bearings 306. Ball 308 is disposed over the plurality of ball bearings 306 within ball race 304. The plurality of ball bearings 306 forming a single layer and allowing ball 308 to roll within ball race 304 and over the plurality of ball bearings 306. In various embodiments, the plurality of ball bearings may each have a diameter of about 1/16 inch (about 0.16 centimeter) to about 1/4 inch (about 0.64 centimeter), and more specifically, about 1/8 inch (about 0.32 centimeter). In various embodiments, ball 308 has a diameter of about 0.8 inch (about 2 centimeters) to about 1.2 inches (about 3 centimeters), and more specifically, about 1 inch (about 2.5 centimeters). In various embodiments, ball 308 is hollow. Ball race cover 310 is coupled to ball race 304 to secure ball 308 and the plurality of ball bearings 306 in place.

Latch pins 314 are disposed between can 302 and top cover 312. Latch pins 314 may be spring loaded and configured to retract and extend. Latch pins 314 secure ball transfer unit 300 to the cargo handling system (e.g., cargo handling system 100 and/or top surface 110). In various embodiments, each latch pin 314 includes a chamfered edge to push latch pin 314 into ball transfer unit 300 for installation. Top cover 312 has a diameter greater than diameter d1 and is configured to contact and be supported by the cargo handling system (e.g., top surface 110).

Spring 316 is disposed in can 302, specifically on horizontal portion 302c. Ball race 304 (including ball 308, ball race cover 310, and the plurality of ball bearings 306) is disposed over spring 316. Spring 316 provides support and load attenuation that prolongs the life of ball transfer unit 300. In various embodiments, spring 316 is an elastomeric spring. Using an elastomeric spring, such as spring 316, allows can 302, and therefore, ball transfer unit 300 to be shorter than conventional ball transfer units. Spring 316 provides similar support and load attenuation as currently existing compression springs while being lighter and using less space. Furthermore, the shorter ball transfer unit 300 may be used in lower height cargo systems than conventional ball transfer units.

In various embodiments, spring 316 may be formed from a fluorosilicone, a fluorocarbon, a nitrile, or a thermo-plastic rubber (TPR), among other materials. In various embodiments, spring 316 may be annular shaped, matching the round shape of can 302. In various, embodiments, spring 316 may be other shapes such as, for example, hexagonal, octagonal, or helical, among others. In various embodiments, spring 316 has a circular cross section, as illustrated. In various embodiments, spring 316 may have a triangular cross section, a square cross section, a rectangular cross section, or a hexagonal cross section, among others.

In FIG. 3B, an unloaded ball transfer unit 300 is illustrated with spring 316 in an uncompressed state and supporting ball race 304. Ball race 304 is in contact with spring 316 and spring 316 is in contact with can 302. In FIG. 3C, a loaded ball transfer unit 300 is illustrated with spring 316 in a compressed state and supporting ball race 304. This may occur as cargo is being loaded onto aircraft 10, for example. Spring 316 provides support for the cargo load and attenuation of the cargo load thereby improving the loading and unloading of the cargo and prolonging the life of ball transfer unit 300.

In various embodiments, first attenuation limiter 318 may be formed into can 302 between lower portion 302b and horizontal portion 302c. First attenuation limiter 318 may provide additional support for ball race 304 when ball transfer unit 300 is in the loaded state. In various embodiments, first attenuation limiter 318 may include an elastomeric material that is configured to compress when loaded (e.g., ball race 304 moving downward in the negative y-direction). In various embodiments, first attenuation limiter 318 may include a less-compressible material that provides additional structural support for can 302 to resist deformation under load. In various embodiments, first attenuation limiter 318 may be engaged and/or contacted after spring 316 is fully compressed. In various embodiments, first attenuation limiter 318 may be engaged and/or contacted prior to spring 316 being fully compressed. In various embodiments, first attenuation limiter 318 may extend around a circumference of can 302.

In various embodiments, second attenuation limiter 320 may be formed in a bottom 302d of can 302. Second attenuation limiter 320 may provide additional support for ball race 304 when ball transfer unit 300 is in the loaded state. In various embodiments, second attenuation limiter 320 may be a hole formed in the bottom of can 302 that allows a bottom portion of ball race 304 to pass through the hole to not deform ball race 304. In various embodiments, second attenuation limiter 320 may include an elastomeric material that is configured to compress when loaded. In various embodiments, second attenuation limiter 320 may include a less-compressible material that provides additional structure support for can 302 to resist deformation under load. In various embodiments, second attenuation limiter 320 may be engaged and/or contacted after spring 316 is fully compressed. In various embodiments, second attenuation limiter 320 may be engaged and/or contacted prior to spring 316 being fully compressed.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A ball transfer unit, comprising:
a can (302);
a ball race (304) disposed in the can (302);
a ball supported by the ball race (304); and
an elastomeric spring (316) disposed between the ball race (304) and the can (302), the elastomeric spring (316) supporting the ball race (304).

2. The ball transfer unit of claim 1, further comprising:
a plurality of ball bearings disposed in the ball race (304) and between the ball race (304) and the ball; and
a ball race (304) cover configured to secure the ball in the ball race (304).

3. The ball transfer unit of claim 1 or 2, wherein the can (302) further comprises:
a first vertical portion having a first diameter;
a second vertical portion disposed below the first vertical portion, the second vertical portion having a second diameter, the second diameter is less than the first diameter; and
a horizontal portion extending between the first vertical portion and the second vertical portion.

4. The ball transfer unit of claim 3, wherein the can (302) further comprises:
a first attenuation limiter formed adjacent the horizontal portion and the second vertical portion, the first attenuation limiter configured to provide support for an outer edge of the ball race (304) when the ball transfer unit is under a load, and wherein the can (302) further comprises:
a second attenuation limiter formed in a bottom portion of the can (302), the second attenuation limiter configured to support a bottom portion of the ball race (304) when the ball transfer unit is under the load.

5. The ball transfer unit of any preceding claim, wherein the elastomeric spring (316) includes one of a fluorosilicone, a fluorocarbon, a nitrile, and a thermo-plastic rubber, and/or . wherein the elastomeric spring (316) has a circular cross section.

6. A cargo handling system, comprising:
a ball panel; and
a plurality of ball transfer units disposed in the ball panel, each of the plurality of ball transfer units including:
a can (302);
a ball race (304) disposed in the can (302);
a ball supported by the ball race (304); and
an elastomeric spring (316) disposed between the ball race (304) and the can (302), the elastomeric spring (316) supporting the ball race (304).

7. The cargo handling system of claim 6, wherein each of the plurality of ball transfer units further comprises:
a plurality of ball bearings disposed in the ball race (304) and between the ball race (304) and the ball; and
a ball race (304) cover configured to secure the ball in the ball race (304).

8. The cargo handling system of claim 6 or 7, wherein the can (302) further comprises:
a first vertical portion having a first diameter;
a second vertical portion disposed below the first vertical portion, the second vertical portion having a second diameter, the second diameter is less than the first diameter; and
a horizontal portion extending between the first vertical portion and the second vertical portion.

9. The cargo handling system of claim 8, wherein the can (302) further comprises:
a first attenuation limiter formed adjacent the horizontal portion and the second vertical portion, the first attenuation limiter configured to provide support for an outer edge of the ball race (304) when the ball transfer unit is under a load.

10. The cargo handling system of claim 9, wherein the can (302) further comprises:
a second attenuation limiter formed in a base of the can (302), the second attenuation limiter configured to support a bottom portion of the ball race (304) when the ball transfer unit is under the load.

11. The cargo handling system of any of claims 6 to 10, wherein the elastomeric spring (316) includes one of a fluorosilicone, a fluorocarbon, a nitrile, and a thermo-plastic rubber, and/or wherein the elastomeric spring (316) has a circular cross section.

12. An aircraft, comprising:
a cargo compartment;
a cargo door that provides access to the cargo compartment;
a cargo handling system disposed in the cargo compartment;
a ball panel disposed in the cargo compartment adjacent the cargo door; and
a plurality of ball transfer units disposed in the ball panel, each of the plurality of ball transfer units including:
a can (302);
a ball race (304) disposed in the can (302);
a ball supported by the ball race (304); and
an elastomeric spring (316) disposed between the ball race (304) and the can (302), the elastomeric spring (316) supporting the ball race (304).

13. The aircraft of claim 12, wherein the can (302) further comprises:
a first vertical portion having a first diameter;
a second vertical portion disposed below the first vertical portion, the second vertical portion having a second diameter, the second diameter is less than the first diameter; and
a horizontal portion extending between the first vertical portion and the second vertical portion.

14. The aircraft of claim 13, wherein the can (302) further comprises:
a first attenuation limiter formed adjacent the horizontal portion and the second vertical portion, the first attenuation limiter configured to provide support for an outer edge of the ball race (304) when the ball transfer unit is under a load, and optionally wherein the can (302) further comprises:
a second attenuation limiter formed in a base of the can (302), the second attenuation limiter configured to support a bottom portion of the ball race (304) when the ball transfer unit is under the load.

15. The aircraft of claim , wherein the elastomeric spring (316) includes one of a fluorosilicone, a fluorocarbon, a nitrile, and a thermo-plastic rubber, and/or wherein the elastomeric spring (316) has a circular cross section.
